# EUROPÄISCHE PATENTANMELDUNG

(11) **EP 2 522 301 A2**
(43) Veröffentlichungstag der Anmeldung: **14.11.2012**
(21) Anmeldenummer: 12167273.7
(22) Anmeldetag: 09.05.2012
(51) Int. Cl.: A61C 8/00

(54) **Verfahren zur Behandlung von keramischen Oberflächen sowie keramische Implantate auf der Basis von Zirkonoxid**

(30) Priorität: 13.05.2011 DE 102011050335
(71) Anmelder: MicroCeram GmbH, 01662 Meißen (DE)
(72) Erfinder: Scharnweber, Prof. Dr. habil Dieter, 01824 Kurort Gohrisch (DE); Ritter, Michael, 01159 Dresden (DE)
(74) Vertreter: Sperling, Thomas

(57) **Zusammenfassung**

Verfahren zur Behandlung von keramischen Oberflächen sowie keramische Implantate auf der Basis von Zirkonoxid

Die Erfindung betrifft ein Verfahren zur Behandlung von keramischen Oberflächen auf der Basis von Zirkonoxid, wobei
- die Oberfläche mit einem Strahlverfahren behandelt und aufgeraut wird und anschließend
- mit einem ersten Ätzverfahren eine Mikrometer-Morphologie der Oberfläche erzeugt wird und danach
- mit einem zweiten Ätzverfahren eine Sub-Mikrometer-Morphologie der Oberfläche erzeugt wird.

## Beschreibung

Die Erfindung betrifft ein Verfahren zur Behandlung von keramischen Oberflächen und mit dem Verfahren erzeugte Implantate. Als bevorzugtes Einsatzgebiet der Erfindung sind ganz allgemein die Behandlung von Implantaten zu nennen, die durch die Modifikation der Oberfläche besser in die umgebenden Gewebe integrierbar sind. Ein bevorzugtes Einsatzgebiet für Verfahren nach der Erfindung ist die Behandlung von Dentalimplantaten.

Im Stand der Technik sind diverse Verfahren und damit erzeugte Implantate bekannt, die eine modifizierte Oberflächenstruktur aufweisen. Ziel der Bestrebungen der Modifikation der Oberfläche ist es, das An- und Einwachsen von Implantatoberflächen mit dem umgebenden Körpergewebe zu verbessern.

Es hat sich gezeigt, dass nach bestimmten Parametern strukturierte Oberflächen besser im Gewebe einwachsen als beispielsweise polierte Oberflächen. Somit sind im Stand der Technik vielfältige Verfahren bekannt, die Oberflächenmodifizierungen durch mechanische und/oder chemische Verfahren auf der Oberfläche von Implantaten erzeugen.

Aus der DE 10 2008 011 963 A1 ist beispielsweise ein Zahnimplantat, vorzugsweise aus Metall oder Metalllegierungen bekannt, welches durch einen Strahlvorgang mit einem harten Strahlmittel und einem nachfolgenden Ätzvorgang mit einer Oberflächenmikrostruktur versehen wird, wobei ein Ätzmittel mit einer hohen Konzentration von Kaliumhydroxid eingesetzt wird.

Aus der EP 1 982 670 A1 geht ein Verfahren zur Erzeugung einer Oberflächenstruktur eines Dentalimplantates speziell für ein keramisches Material hervor. Dabei wird vorgeschlagen, die Oberfläche des Dentalimplantates vor dem Ätzvorgang durch Sandstrahlen beziehungsweise ähnliche mechanische Behandlungen vorzubehandeln und dann einen Ätzprozess mit Flusssäure bei einer Temperatur von mindestens 70°C durchzuführen. Als keramische Materialien werden solche auf der Basis von Zirkoniumoxid offenbart.

Aus der DE 10 2006 033 547 A1 geht ein Verfahren zur Herstellung eines Implantates auf Zirkonoxidbasis für den Knochenkontakt hervor, welches gleichfalls mit Flusssäure in einem Ätzverfahren behandelt und zuvor einem Sandstrahlverfahren ausgesetzt ist und anschließend einer Hitzebehandlung unterworfen wird.

Auch aus der EP 1 825 830 A1 geht ein zweiteilig aufgebautes Implantat hervor, welches aus den üblichen Implantatmaterialien aufgebaut und welches durch einen Strahlvorgang mit einem anschließenden Ätzvorgang oberflächenbehandelt ist. Als Ätzstoffe werden anorganische Säuren und Mischungen dieser Säuren offenbart, beispielsweise Flusssäure, Salzsäure und Schwefelsäure. Weiterhin wird angegeben, dem Ätzmittel Wasserstoffperoxid zuzumischen.

In der WO 03/059407 A1 werden oberflächenmodifizierte Implantate beschrieben, deren Oberfläche im hydroxylierten Zustand mit einem Polypeptid versehen wurde. Damit wird der Ansatz verfolgt, durch spezielle Stoffe, wie zum Beispiel Wachstumsfaktoren oder Hormone oder ein Gemisch solcher Verbindungen, das Einwachsen des Implantates in dem umgebenden Gewebe zu verbessern.

Aus der EP 1 779 807 A1 ist ein Verfahren zur Herstellung eines einteiligen Dentalimplantates bekannt, bei dem der Grundkörper zunächst sandgestrahlt und dann mit Phosphorsäure geätzt wird, wobei auch Mischungen von Phosphorsäure, Schwefelsäure oder Salzsäure zum Ätzen eingesetzt werden. Den Verfahren nach dem Stand der Technik ist gemeinsam, dass bereits teilweise auch erfolgreich kombinierte Verfahren der Oberflächenbehandlung von keramischen Materialien durchgeführt werden. Die Kombination von mechanischen Verfahren der Oberflächenbearbeitung mit chemischen Verfahren, wie dem Ätzverfahren, führt zu Oberflächenmodifikationen an den behandelten Materialoberflächen, die zu Verbesserungen bei der Integration des Implantatmaterials im menschlichen oder tierischen Körpergewebe führt.

Andererseits zeigt der Umfang an Verfahren im Stand der Technik, dass es immer noch ein Bedürfnis nach Verbesserungen auf dem in Rede stehenden Gebiet gibt.

Der Erfindung liegt somit die Aufgabe zu Grunde, ein Verfahren und ein Implantat mit einer keramischen Oberfläche auf der Basis von Zirkonoxid zur Verfügung zu stellen, welches durch die gezielte Modifikation der Oberfläche ein weiter verbessertes Verhalten zeigt.

Die Aufgabe der Erfindung besteht weiterhin darin, ein wirtschaftliches Verfahren zur Oberflächenbehandlung zur Verfügung zu stellen.

Die Aufgabe wird durch die Merkmale der selbständigen Patentansprüche gelöst. Weiterbildungen sind in den abhängigen Patentansprüchen angegeben.

Die Aufgabe wird durch ein Verfahren zur Behandlung von keramischen Oberflächen auf der Basis von Zirkonoxid gelöst, wobei die Oberfläche zunächst mit einem Strahlverfahren mechanisch behandelt und aufgeraut wird und anschließend mit einem ersten Ätzverfahren eine so genannte Mikrometer-Morphologie (µm-Morphologie) der Oberfläche erzeugt wird und danach mit einem zweiten Ätzverfahren eine so genannte Sub-Mikrometer-Morphologie (sub-µm-Morphologie) der Oberfläche erzeugt wird.

Die Konzeption der Erfindung besteht in einer Herangehensweise in drei einzelnen Verfahrensschritten mit jeweils abgrenzbarer Funktion, in deren Ergebnis eine aufgabengemäß optimierte Oberfläche erzeugt wird.

Die Behandlung der keramischen Oberfläche in einem ersten Schritt mit mechanischen Verfahren, wie dem Strahlen, ist als Einzelschritt geeignet, die Oberfläche aufzurauen. Im Unterschied zur Herangehensweise nach dem Stand der Technik, in welchem das mechanische Vorbehandeln vor der chemischen Behandlung überwiegend als nicht unbedingt erforderlicher Zusatzschritt angegeben wird, führt eine mechanische Behandlung nach der Konzeption der Erfindung erst zu den gewünschten Ergebnissen bei der Erzeugung der Mikrometer-Morphologie durch den ersten sich anschließenden Ätzvorgang.

Im nächsten Schritt, dem ersten Ätzverfahren, wird die raue Oberfläche mit der so genannten Mikrometer-Morphologie versehen. Unter einer Mikrometer-Morphologie ist eine Oberfläche zu verstehen, deren Strukturierung Elemente in der Größenordnung von einem bis zehn Mikrometern ergibt.

In einem sich erfindungsgemäß anschließenden zweiten Ätzverfahren wird im Unterschied zum ersten Ätzverfahren eine so genannte Sub-Mikrometer-Morphologie erzeugt. Unter einer Sub-Mikrometer-Morphologie ist eine Oberfläche zu verstehen, deren Strukturierung Elemente in der Größenordnung von weniger als einem Mikrometer ergibt.
Für den Fachmann versteht sich, dass die Zahlenangaben die Dimensionierung der Strukturierung verdeutlichen sollen.

Besonders bevorzugt wird das Strahlverfahren dadurch ausgebildet, dass ein Korund-Strahlverfahren angewendet wird, bei dem Korund-Partikel, die aus Al₂O₃ bestehen, als Strahlmittel eingesetzt werden.

Nach einer weiteren Ausgestaltung der Erfindung können auch alternative Strahlverfahren, wie das Sandstrahlen oder Strahlen mit Siliziumkarbid angewendet werden, um die keramische Oberfläche entsprechend aufzurauen und für den Angriff der Ätzverfahren vorzubereiten.

Nach einer besonders vorteilhaften Ausgestaltung der Erfindung wird im ersten Ätzverfahren mit 65%iger Salpetersäure, Wasser und 48%iger Flusssäure in einem Volumenverhältnis von 45 zu 10 zu 45 geätzt.

Besonders vorteilhaft ist es, diesen ersten Ätzschritt über einen Zeitraum von 90 Minuten bei Raumtemperatur anzuwenden. Im Ergebnis entsteht eine Mikrometer-Morphologie.

Eine vorteilhafte Ausgestaltung der Erfindung ergibt sich weiterhin dadurch, dass in dem zweiten Ätzverfahren 5%ige Flusssäure angewandt wird, um eine so genannte Sub-Mikrometer-Morphologie innerhalb der Mikrometer-Morphologie zu erzeugen.
Es hat sich als günstig erwiesen, diesen zweiten Ätzschritt über einen Zeitraum von 15 Minuten bei Raumtemperatur anzuwenden.

Bevorzugt wird die Erfindung dadurch weitergebildet, dass die Oberfläche vor dem Strahlen geschliffen wird.

Die Erfindung wird weiterhin dadurch realisiert, ein Implantat mit einer modifizierten keramischen Oberfläche nach der vorangehend beschriebenen Konzeption der Erfindung auszubilden, wobei das Implantat aus Zirkoniumdioxid ausgebildet ist und die Oberfläche einen Benetzungswinkel mit Wasser von weniger als 20° aufweist. Als Verfahren zur Bestimmung des Benetzungswinkels wurde die Methode der dynamischen Kontaktwinkelmessung mit destilliertem Wasser an einem OCA 30 System der Firma dataphysics, Filderstadt, Deutschland, bei Raumtemperatur angewendet.

Das hintereinander geschaltete zweifache Ätzen mit unterschiedlichen Ätzmitteln, auch als Doppelätzen bezeichnet, führt über eine Strukturierung der Oberfläche mit einer Mikrometer-Morphologie zur Ausbildung einer Sub-Mikrometer-Morphologie.
Ein vorheriges Strahlen der Oberfläche führt zu raueren Oberflächen, was die Wirksamkeit der nachfolgenden Ätzverfahren erhöht.

Überraschenderweise hat sich gezeigt, dass die Ätzverfahren in Abhängigkeit der angewandten Ätzmittel und der Parameter der Anwendung zu qualitativ und quantitativ unterscheidbaren Oberflächenmodifikationen führen und dass eine Kombination von zwei Ätzschritten auch zur Kombination der signifikant verschiedenen Oberflächenmodifikationstypen führt.

In einem ersten Ätzschritt mit Salpetersäure, Wasser und Flusssäure über 90 Minuten kommt es zur Ausbildung der Mikrometer-Morphologie. In dem zweiten Ätzschritt kann dann zur Bildung der Sub-Mikrometer-Morphologie durch ein Ätzen mit 5%iger Flusssäure bei Raumtemperatur über 15 Minuten zurückgegriffen werden, wobei im Ergebnis eine stark hydrophile Oberfläche erzeugt wird.
Gleichfalls konnte herausgefunden werden, dass das vorangehende Strahlen mit Korund diese Ätzkombination vorteilhaft unterstützt und die Ergebnisse mit hydrophilen Benetzungswinkeln im Bereich von weniger als 20° liegen.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Rasterelektronenmikroskopische Aufnahme einer korundgestrahlten Oberfläche von ZrO₂;
- Fig. 2:: Rasterelektronenmikroskopische Aufnahme einer korundgestrahlten und geätzten Oberfläche von ZrO₂;
- Fig. 3:: Rasterelektronenmikroskopische Aufnahme einer korundgestrahlten und doppelt geätzten Oberfläche von ZrO₂ und
- Fig. 4:: Diagramm Benetzungswinkel nach Behandlung.

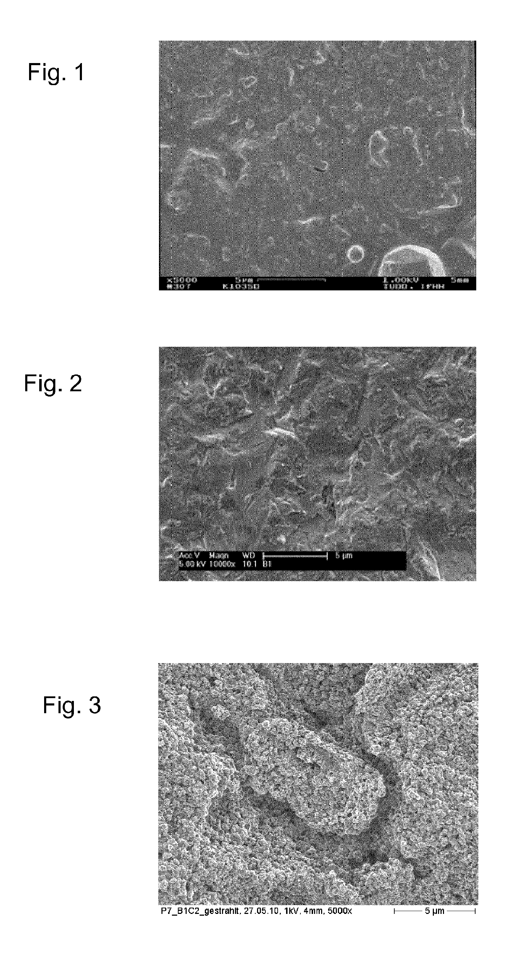

In Figur 1 ist eine rasterelektronenmikroskopische Aufnahme einer korundgestrahlten Oberfläche von Zirkoniumdioxid, auch als Zirkonoxid bezeichnet, dargestellt. Die keramische Oberfläche wurde zunächst geschliffen und anschließend mit Korund-Partikeln gestrahlt. Durch das Korund-Strahlen ist die Oberflächenmorphologie der keramischen Oberfläche nur geringfügig aufgeraut und es ist eher der Effekt des Einebnens der Schleifriefen festzustellen, so dass nach dem Strahlen die Schleifspuren nicht mehr in der Aufnahme zu sehen sind.

In Figur 2 ist eine rasterelektronenmikroskopische Aufnahme einer korundgestrahlten und anschließend geätzten Oberfläche von Zirkonoxid dargestellt. Das Ätzen erfolgte über einen Zeitraum von 90 Minuten mit einem Ätzmittel, bestehend aus Salpetersäure, Wasser und Flusssäure, im Verhältnis von 45 : 10 : 45 Volumenprozent bei Raumtemperatur. Der chemische Angriff führt beim Einwirken des Ätzmediums zu nicht regelmäßigen Strukturen auf der Oberfläche. Ein weiterer Effekt dieses ersten Ätzschrittes besteht in einem Reinigungseffekt für die Oberfläche von Strahlmittel. Die erhaltene Oberflächenmorphologie kann als eine Strukturierung im Mikrometerbereich angesehen werden. Die typischen Strukturen liegen im Bereich einiger Mikrometer, was durch die Maßstabsangabe im unteren Bereich der Figur 2 ableitbar ist. Die erhaltenen Strukturen liegen im Bereich von 2 bis 8 Mikrometern und bilden die Basis für den nachfolgenden Ätzschritt, welche Strukturen im Submikrometerbereich erzeugt.

In Figur 3 ist schließlich eine rasterelektronenmikroskopische Aufnahme einer gestrahlten und doppelt geätzten Oberfläche aus Zirkonoxid dargestellt. Der zweite Ätzschritt nach Figur 3 betrifft das Ätzen der Oberfläche in 5 %iger Flusssäure bei Raumtemperatur über einen Zeitraum von 15 Minuten.
Der zweite Ätzschritt führt zu einer Morphologie im Submikrometerbereich. Die erhaltene Struktur kommt überraschenderweise der Erzeugung von Oberflächenzuständen auf Titanimplantaten gleich. Derartige Oberflächenmorphologien zeichnen sich bei Titanimplantaten durch eine beschleunigte Einheilung und eine erhöhte Knochenanlagerung aus.
Diesem potentiellen Vorteil der Anwendung von zirkoniumoxidbasierten Zahnimplantaten steht für deren aktuell genutzte Oberflächenzustände jedoch der Nachteil eines vergleichsweise langsamen Einheilverhaltens gegenüber. Daran gekoppelt ist für entsprechend behandelte Patienten ein längerer Übergangszeitraum bis zur vollständigen Restauration und damit ein Verlust an Lebensqualität gegenüber der Anwendung von Titanimplantaten.

Somit lassen sich mit dem beschriebenen Verfahren diese vorteilhaften Strukturen mittels der angegebenen Behandlung auch auf Implantaten auf der Basis von Zirkonoxid erzeugen und ein wesentlicher Nachteil dieses Materials gegenüber Titan ist damit behoben. Damit lassen sich erfindungsgemäß behandelte keramische Werkstoffe auf der Basis von Zirkonoxid vorteilhaft für Implantate insbesondere im Dentalbereich einsetzen.

Zwischen den Ätzschritten erfolgt jeweils eine Spülung der Oberflächen zur Befreiung von dem vorangegangenen Ätzmittel.

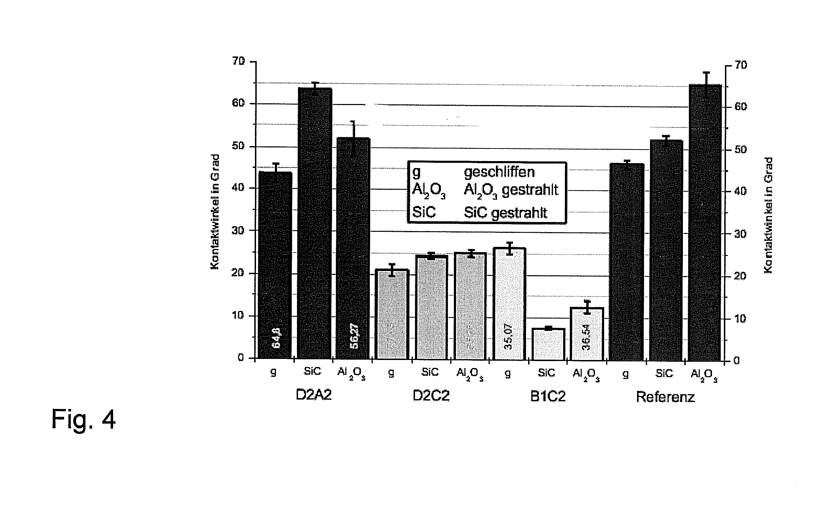

In Figur 4 ist der Kontaktwinkel von Wasser in Grad in Abhängigkeit der Behandlung einzelner Proben dargestellt. Die niedrigsten, und damit günstigsten Werte, wurden mit dem in den Figuren 1, 2 und 3 beschriebenen Behandlungsregime erreicht. Das Strahlen mit Siliziumkarbid erniedrigt nochmals vorteilhaft den Kontaktwinkel. Das erfindungsgemäße Doppelätzverfahren betrifft die Kombination der Ätzverfahren mit den vorangehend beschriebenen Parametern, hier als Kombination B1C2 auf der Abszisse des Diagramms in Fig. 4 bezeichnet.

In der dargestellten Kombination von Schleifen, Korundstrahlen und doppelter Ätzung der Oberfläche werden hervorragende Benetzungswinkel von weniger als 20° ermittelt, die lediglich durch mit Siliziumcarbid gestrahlte Oberflächen noch geringfügig besser ausfallen. Die dargestellten Benetzungswinkel betrugen 8° und 13°, was außerordentlich vorteilhafte Werte für Zirkonoxidoberflächen darstellt.

## Patentansprüche

1. Verfahren zur Behandlung von keramischen Oberflächen auf der Basis von Zirkonoxid, wobei
- die Oberfläche mit einem Strahlverfahren behandelt und aufgeraut wird und anschließend
- mit einem ersten Ätzverfahren eine Mikrometer-Morphologie der Oberfläche erzeugt wird und danach
- mit einem zweiten Ätzverfahren eine Sub-Mikrometer-Morphologie innerhalb der Mikrometer-Morphologie der Oberfläche erzeugt wird.

2. Verfahren nach Anspruch 1, **dadurch gekennzeichnet, dass** als Strahlverfahren Korundstrahlen, Sandstrahlen oder Strahlen mit Siliziumkarbid angewendet wird.

3. Verfahren nach Anspruch 1 oder 2, **dadurch gekennzeichnet, dass** im ersten Ätzverfahren 65%-ige Salpetersäure, Wasser und 48%-ige Flusssäure in einem Volumenverhältnis von 45:10:45 angewandt werden.

4. Verfahren nach Anspruch 3, **dadurch gekennzeichnet, dass** der erste Ätzschritt über einen Zeitraum von 90 Minuten bei Raumtemperatur erfolgt.

5. Verfahren nach einem der Ansprüche 1 bis 4, **dadurch gekennzeichnet, dass** im zweiten Ätzverfahren 5%-ige Flusssäure angewandt wird.

6. Verfahren nach Anspruch 5, **dadurch gekennzeichnet, dass** der zweite Ätzschritt über einen Zeitraum von 15 Minuten bei Raumtemperatur erfolgt.

7. Verfahren nach einem der Ansprüche 1 bis 6, **dadurch gekennzeichnet, dass** die Oberfläche vor dem Stahlen geschliffen wird.

8. Implantat mit einer modifizierten Oberfläche nach einem der vorangegangenen Ansprüche, **dadurch gekennzeichnet, dass** das Implantat aus Zirkonoxid ausgebildet ist und die Oberfläche einen Benetzungswinkel von weniger als 20° aufweist.
